# EUROPEAN PATENT SPECIFICATION

(11) **EP 0 700 419 B1**
(45) Date of publication and mention of the grant of the patent: **24.11.1999**
(21) Application number: 95928860.6
(22) Date of filing: 21.03.1995
(51) Int. Cl.: C08L 67/06, B29C 70/06

(54) **PROCESS FOR PREPARING A FIBER-REINFORCED COMPOSITE AND MOLDED ARTICLES MADE THEREFROM**
VERFAHREN ZUR HERSTELLUNG EINES FASERVERSTÄRKTEN VERBUNDWERKSTOFFES UND GEFORMTE GEGENSTÄNDE DARAUS
PROCEDE DE PREPARATION D'UN MATERIAU COMPOSITE RENFORCE PAR DES FIBRES ET ARTICLES MOULES FABRIQUES A PARTIR DE CELUI-CI

(30) Priority: 23.03.1994 US 217119
(43) Date of publication of application: 13.03.1996
(73) Proprietor: COOK COMPOSITES AND POLYMERS, Kansas City, MO 64141 (US)
(72) Inventor: CAMPANELLA, David, A., North Kansas City, MO 64116 (US); HSU, Chih-Pin, G., North Kansas City, MO 64116 (US)
(74) Representative: Jolly, Jean-Pierre
(86) International application number: PCT/EP95/01042
(87) International publication number: WO 95/25771

(56) References cited:
- EP-A- 0 470 271
- EP-A- 0 492 532
- FR-A- 2 689 154
- US-A- 3 701 748
- US-A- 4 902 215

## Description

This invention relates to fiber-reinforced thermosetting polyester composites. In one aspect, the invention relates to such composites made by a vacuum-assisted transfer molding technique while in another aspect, the invention relates to such composites made from low or zero shrinkage polyester resin systems. The physical strength of the composites of this invention is much greater and their surface appearance much smoother than those of similar composites made from conventional hand lay-up, spray-up, or resin transfer molding techniques. The composites of this invention can serve as the cosmetic surface of molded articles, e.g. a boat hull or a truck body panel without the finishing steps of sanding and polishing.

Composite materials are known to have the advantages of high strength, light weight, design flexibility, dimensional stability, corrosion resistance, parts consolidation, better finishing, and low tooling cost over traditional construction materials such as metal, ceramics, and wood. Fiber-reinforced thermosetting polyester composites are widely used in many applications, e.g. marine, automotive, transportation, electrical, construction, consumer and industrial goods. Compared to the composites made from other types of thermosetting resins such as vinyl ester, epoxy, and polyamide, thermosetting polyester composites have the advantages of lower material cost and easy material handling during processing Therefore, unsaturated polyester resins are the materials of choice for most of the fiber-reinforced thermosetting composites in applications in which the working environment of the composite is not very harsh.

Fiber-reinforced thermosetting polyester composites usually consist of reinforcing fibers, either in chopped or continuous form, embedded in a matrix of one or more unsaturated polyester resins.

In the formation of the matrix, the unsaturated polyester resin is blended typically with (1) one or more monomers capable of crosslinking with the vinyl groups in the polyester, (2) one or more free-radical initiators, and possibly (3) various other additives which impart desired characteristics to the matrix upon cure or which will improve the processing and/or curing properties of resin. This curable blend of components is known as the matrix precursor.

The physical and chemical properties of the composite, such as its physical strength, physical modulus, flexibility, and heat distortion temperature, can be controlled by appropriate selection of the ingredients in the manufacture of unsaturated polyester resin, or the crosslinking monomers, free-radical initiators, fibers, and other additives used in the preparation of composite.

Various processing methods can be applied to produce fiber-reinforced thermosetting polyester composites. The hand lay-up and spray-up processes are the most common practices in the manufacture of large and complex composite parts, such as boat hulls and truck body panels. Continuous or chopped fiber mats are impregnated with and engulfed in a matrix resin, and the resin is cured without additional heat or pressure. The typical fiber reinforcement (e.g. glass fiber) content of a composite made by these techniques is only about 20 to about 40 % by weight, based on the weight of the cured composite. Therefore, the physical strength (as measured by any one of a number of different tests) of these composites is typically not very great and if greater physical strength is desired for a particular application, then a thicker composite is usually required (the physical strength of a composite being a function of the fiber content of the composite and its thickness). Moreover, the surface appearance of the finished part made with these methods may vary widely from part to part depending on various factors, e.g. processing conditions and the nature of the thermosetting resin .

Thermosetting polyester composites with better physical strength and/or consistent surface appearance can be produced by other types of manufacturing techniques, such as filament winding, compression molding, transfer molding, injection molding, and pultrusion. These techniques can produce parts with very high fiber content, typically from about 50 to about 70 % by weight, based on the weight of the cured composite. However, the nature of these processes, and in some the added tooling and operational costs, prevent their use in the manufacture of very large and complex parts such as boat hulls and truck body panels.

With the introduction of vacuum-assisted transfer molding techniques as described in US-A-4,902,215 very large, complex and physically strong composites can be manufactured with relatively low tooling and operational costs. Broadly speaking, in such techniques a flexible sheet, liner, or bag is used to cover a single cavity mold which contains the dry or wet fiber lay-up. In accordance with the former, the edges of the flexible sheet are clamped against the mold to form an envelope and seal the member, a catalyzed liquid resin is generally introduced into the envelope, or bag interior, to wet the fiber, and a vacuum is applied to the bag interior via a vacuum line to collapse the flexible sheet against the fiber and surface of the mold, while the plastic wetted fiber is pressed and cured to form the fiber reinforced plastic structure. Resin fumes from the process are prevented from escaping into the ambient work space. The apparatus disclosed in US-A-4,902,215 is specifically designed for the production of fiber-reinforced plastic structures having high reinforcement-to-resin ratios.

However, because a composite made by vacuum-assisted transfer molding has a very high fiber content, the cosmetic surface appearance of the composite is more sensitive to shrinkage that naturally occurs during the cure of a thermosetting polyester resin. Significant fiber pattern print through can be observed, sometimes even though both a skin laminate and a gel coat are further applied to the surface of the composite construction. Correction of this problem by sanding and polishing after the composite is made requires considerable effort which undermines, or even may eliminate, the savings in operating and material costs otherwise gained from using a vacuum-assisted technique.

The composite industry holds a continuing interest in the development of a method which therefore is the main purpose of the present invention, for the manufacture of a fiber-reinforced thermosetting polyester composite that possesses both great physical strength (relative to a composite made from a traditional hand lay-up and spray-up method) and a smooth surface appearance. Such a composite will be a ready candidate for molded parts, especially parts of large size and/or complex shape, requiring both physical attributes.

According to this invention, there is provided a vacuum-assisted transfer molding process for preparing a fiber-reinforced thermosetting polyester composite, the said composite comprising reinforcing fiber in excess of 30 wt %, based upon the weight of the matrix precursor, from :
a) about 20 to about 60 % of an unsaturated polyester resin with a molecular weight/double bond factor between about 150 to about 190 ;
b) about 30 to about 70 % of a reactive monomer ;
c) about 1 to about 25 % of a thermoplastic polymer which is miscible in a blend of the polyester resin and the reactive monomer ; and
d) an initiating amount of a free radical initiator.
wherein the process comprises
a) coating the surface of the mold with a gel coat;
b) allowing the gel coat of step a) to at least partially cure;
c) applying a skin laminate over the at least partially cured gel coat of step (b);
d) applying fibre reinforcement to the skin laminate of step (c);
e) closing the mold; and
f) while the mold is under vacuum, injecting the matrix precursor.

The hallmark of the composites thus prepared is their combination of physical strength (as measured by one or more standard strength tests for composites) and smooth surface profile (as compared to the thermosetting polyester composites made from a typical hand lay-up or spray-up process).

Molded articles in which the composites of this invention are used as a component comprise a layer of gel coat, typically 0.25 to about 0.63 mm in thickness, as the surface coating. A skin laminate, typically from about 0.25 to 0.76 mm in thickness, is applied behind the gel coat to improve the hydrolytic stability and surface smoothness of the molded article. The fiber content of the skin laminate typically ranges about 25 to about 45 % by weight, and the fiber typically is either in the form of 12 to 50 mm chopped fiber or a sheer of a continuous strand fiber mat.

The unsaturated polyester resins used in the invention are known in the art. Preferred resins are those with a molecular weight/double bond or vinyl group (-C=C-) factor between about 155 and about 190, more preferably between about 155 and about 170, such as described in US-A-3,701,748. These resins are made from the reaction of at least one polyhydric alcohol with at least an ethylenically unsaturated dicarboxylic acid or its anhydride. The reaction mixture may also include dicyclopentadiene in order to control the molecular weight of the unsaturated polyester resin. The unsaturated polyester resin typically has a number average molecular weight in the range from about 500 to about 5,000, preferably in the range from about 700 to about 2,000.

The ethylenically dicarboxylic acid or its anhydride used in the preparation of the unsaturated polyester resin include maleic acid or anhydride, fumaric acid, citraconic acid, mesaconic acid, methyl maleic acid, tetraconic acid and itaconic acid. A minor proportion of ethylenically unsaturated dicarboxylic acid or anhydride preferably up to about 30 mole percent, can be replaced by one or more saturated dicarboxylic acids or their anhydrides, such as phthalic acid or anhydride, isophthalic acid, terephthalic acid, tetrahydrophthalic anhydride, succinic acid, adipic acid, sebacic acid, methylsuccinic acid, tetrabromophthalic acid, tetrachlorophthalic acid, hexachloro-endomethylene tetrahydrophthalic acid, glutaric acid, pimelic acid and dimerized fatty acids.

The polyhydric alcohols used in the preparation of the unsaturated polyester resin include saturated aliphatic diols such as ethylene glycol, diethylene glycol, triethylene glycol, propylene glycol, dipropylene glycol, tripropylene glycol, butylene glycols, neopentyl glycol, 1,3- and 1,4-butane diols, 1,5-pentane diol, 1,6-hexanediol and 2-methyl-1,3 propanediol. Glycerol, 1,1,1-trimethylolpropane, bisphenol A and its hydrogenated and alcoxylated derivatives may also be used.

The molar ratio of the polyhydric alcohol to the dicarboxylic acid or anhydride in the reaction mixture is preferably between about 1.0 and aboutl.2.

The amount of unsaturated polyester resin in the matrix percursor is preferably between about 30 and about 50 percent by weight.

Any reactive monomer that will copolymerize and crosslink with the vinyl groups of the unsaturated polyester resin can be used, alone or as a mixture of monomers, in the practice of this invention. These monomers include such materials as styrene, vinyl toluene, p-methyl styrene, chlorostyrene, t-butyl styrene, divinylether, allyl phthalate, diallyl maleate, allyl methacrylate, allyl acetate, N-vinylpyrrolidone, N-vinylcarbazole, dichlorostyrene, dialkyl fumarates and maleates, diallyl phthalate, mono- or multifunctional lower (C1-C8) alkyl esters of acrylic and methacrylic acids such as methyl methacrylate, cyclohexyl (meth)acrylate, ethylene glycol di(meth)acrylate, propyleneglycol di(meth)acrylate, 1,3- and 1,4-butanediol di(meth)acrylates, 1,6- hexanediol di(meth)acrylate, neopentylglycol di(meth)acrylate, diethyleneglycol di(meth)acrylate, dipropyleneglycol di(meth)acrylate, tripropyleneglycol di(meth)acrylate, triethyleneglycol di(meth)acrylate, trimethylolpropane di(meth)acrylate, glycerol di(meth)acrylate and pentaerythritol di(meth)acrylate. The amount of monomer in the matrix precursor ranges preferably between about 40 to about 60 percent by weight.

The thermoplastic polymers used in the invention as a low profile additive are those that are miscible with the polyester resin and reactive monomer such that upon blending one with the others, a one-phase matrix precursor is formed. These polymers include polyvinyl acetate, polyester-based polyurethanes, polycaprolactones, cellulose acetate butyrate, saturated polyesters and copolymers of alkyl methacrylate(s) in which the alkyl group has from 1 to 4 carbon atoms and of unsaturated monomers bearing at least one hydroxyl group, the said copolymers having a molecular weight of between 1,000 and 20,000. Except for the latter class of polymers, the weight average molecular weight of these polymers can range from about 3,000 to about 1,000,000, preferably from about 5,000 to about 500,000. The amount of thermoplastic polymer present in the matrix precursor ranges preferably between about 5 to about 20 percent by weight.

The viscosity of the matrix precursor, which is an important feature of this invention, is typically in the range from about 0.1 to about 1 Pa.s, preferably from about 0.15 to about 0.5 Pa.s at ambient temperature, i.e from about 10°C to about 35°C.

Although not preferred, a certain amount of filler can be added to the matrix precursor. Acceptable fillers include natural or precipitated calcium carbonates, clay, silica, talc, mica, and hydrated alumina. If present, the amount of filler added to the matrix precursor is typically less than about 10 percent, preferably less than about 5 percent, by weight, based on the weight of the matrix precursor.

The matrix precursor is cured through the action of one or more free radical initiators, such as an organic peroxide compound, e.g. t-butyl perbenzoate, benzoyl peroxide, cumene hydroperoxide, t-butyl peroctoate, methyl ethyl ketone peroxide, a peroxydicarbonate, a peroxyester such as t-butyl peroxybenzoate, t-butyl peroxyoctoate, 2,5- diperoxyoctoate or 2,4- pentanedione peroxide,and others known in the art. The minimum amount of such initiator used in an initiating amount, and typical amounts present in the matrix precursor preferably range from about 0.1 to about 3 percent by weight, based on the weight of the matrix precursor.

Other materials that can be present in the matrix precursor include polymerization inhibitors, accelerators and other types of additives to improve the processing and/or curing properties of the resin, and/or which impart one or more desired features to the composite. These other materials are used in known amounts and in known ways. However, it is preferable for the performance of the process of the invention that the matrix precursor is free from any demoulding agent.

The gel time of the matrix precursor of this invention will vary with, among others, its composition and the cure conditions, but it is typically between about 5 and about 75 minutes, preferably between about 15 and about 60 minutes, in the absence of heating during the curing process. This feature is of particular importance for determining the maximum time allowed for filling the mold.

The vacuum-assisted transfer molding techniques used in the practice of this invention include those described in US-A-4,902,215, already cited above. These techniques can produce composite materials with a high fiber content, i.e. preferably in excess of 40 percent, typically between about 50 and about 80 percent by weight based on the weight of composite.

The composite of this invention are usually combined with a layer of gel coat and a layer of skin laminate to form a molded part. The gel coat is typically 0.25 to 0.63 mm in thickness, and is the surface coating of the molded part. The gel coat provides the finishing color and surface profile of the part. Gel coats are well known and various grades are commercially available. The selection of gel coat will depend upon the desired characteristics of the part relative to, among other things, weatherability, hydrolytic stability, and surface finishing.

The layer of skin laminate, typically 0.25 to 0.76 mm in thickness, can be applied behind the gel coat to improve the hydrolytic stability and surface smoothness of the molded part. The skin laminate provides an extra barrier to the composite from hydrolytic attack during the employment of the part. The skin laminate also provides protection to the gel coat from the reaction heat and shrinkage normally incident to the cure of the composite. Moreover, the thermosetting resins typically used in the preparation of the skin laminate usually exhibit better hydrolytic stability than those used in the preparation of the composite. Examples of these resins include vinyl esters, vinyl ester modified epoxies, and vinyl ester modified unsaturated polyester resins. The typical fiber content of a skin laminate ranges from about 25 to about 45 percent by weight. The fiber used in the skin laminate is typically either about 12 to about 51 mm chopped fiber or a sheer of a continuous strand fiber mat.

The main structure of the molded part can also include a core insert. An insert is used in those applications in which weight reduction is a factor in the design of the part. The core insert can also serve as a supplement reinforcement material to the composite. Examples of core materials include polyurethane foam, honeycomb structures made from various light weight material, and balsa wood. The thickness of the core can vary widely, but is typically between about 2.5 mm to about 50 mm, the exact dimension being a function of, among other things, the physical strength and weight requirements of the molded part.

Typically, most of the strength characteristics of the molded part are a function of the strength characteristics of the composite, and these characteristics in turn are a function of the amount and nature of the reinforcing fiber. Usually, continuous fiber mats with various weight/area ratios are used in the construction of the composite to provide the desired strength/weight performance to the part. Examples of the various types of reinforcement fibers that can be used in the practice of this invention are glass fibers, boron fibers, carbon fibers, aramid fibers, and other types of natural and synthetic fibers, such as jute, sisal and flax. The typical fiber content of the composite is preferably between about 50 and about 80 percent by weight.

The composite and the molded part can, and often are, constructed in one operation. First, a gel coat is usually applied to the surface of the mold, at least partially cured, and then a skin laminate is applied over the at least partially cured gel coat. These are open mold operations. Then the fiber reinforcement is applied to the skin laminate, the mold closed, and the matrix precursor injected under vacuum. The precursor is then allowed to cure, with or without a heat supplement, and the part or article demolded.

During the construction of the molded part or article, all reinforced materials, i.e. the composite, skin laminate and, perhaps, the core insert, are used under dry conditions. As such, these components can be prepared without undue deference to time. Once prepared, resin is injected into the mold under a vacuum condition through one or more injection paths. The mold filling time can be controlled by the number of injecting paths and the strength of the vacuum. The gel or cure time of is usually about 5 to 10 minutes longer than the fill time. Large, e.g. 30 m by 6 m, parts of complex shape can be made in a single molding process. Because the entire process is under a vacuum condition, the emission of monomers is minimum during the preparation of composites and molded parts.

The invention is further described by the following examples. All percentages are by weight unless otherwise indicated.

### Measurement of Surface Appearance

The rating value (ACT Orange Peel Standards) are typical industry visual test methods used to describe the surface appearance of an object. A BYK-Gardner wave-scan was used to measure the surface appearance of various test panels. The wave-scan can report the results in both long-term (structure size greater than 0.6 mm) and short-term waviness (structure size less than 0.6 mm). Both long-term and short-term waviness are rated from 0 to 100. The higher the number, the more waviness is observed. The long-term and short-term are then mathematically correlated to a surface rating value from 0 to 100. The higher the number, the smoother the surface appears.

### Example 1

A three-component matrix precursor was prepared from an unsaturated polyester, a thermoplastic polymer, and styrene. The unsaturated polyester was prepared by esterifying 1.1 moles of propylene glycol with 0.83 moles of maleic anhydride and 0.17 moles of isophthalic acid to an acid number of 30. The polyester was then dissolved in styrene to a concentration of 63 % solids. This unsaturated polyester had an average molecular weight/vinyl group (-C=C-) factor of 165.

The thermoplastic polymer was a polyvinylacetate with a number average molecular weight of 110,000. This polymer was then dissolved in styrene to a concentration of 17 % solids. 54 parts of the polyester/styrene solution was then blended with 46 parts of the vinyl acetate/styrene solution to yield a liquid, one-phase matrix precursor composition. This precursor composition contained :

| | Parts |
|---|---|
| Unsaturated polyester | 34 |
| Thermoplastic polymer | 8 |
| Styrene | 58 |

The resinous composition was then mixed for 30 minutes to form a homogeneous mixture. This mixture was catalyzed for cure with methyl ethyl ketone peroxide initiator. The gel time of this homogeneous mixture was 45 minutes at 23° C.

A high strength, fiberglass reinforced panel was made on a flat mold at 23° C using the apparatus and technique described in US-A-4,902,215. The fiberglass reinforcements consisted of four layers of PPG 2 oz chopped strand mat. The fiber content of the composite was 55 % by weight based on the weight of composite.

On this composite were measured :
- flexural strength according to ASTM D-790 : 4,720 MPa
- tensile strength according to ASTM D-638 : 2,700 MPa
The surface appearance properties of this composite were also measured as indicated above and are reported in the following table.

### Example 2

An unsaturated polyester prepared by esterifying 1.1 mole of propylene glycol with 1.0 mole of maleic anhydride to an acid number of 30 was blended with a saturated polyester thermoplastic polymer with a number average molecular weight of 2,500. The unsaturated polyester had an average molecular weight/vinyl group factor of 156. Both resins were dissolved in styrene, the composition of the resulting matrix precursor being as follows :

| | Parts |
|---|---|
| Unsaturated polyester | 42 |
| Thermoplastic polymer | 12 |
| Styrene | 46 |

The matrix precursor was then catalyzed and molded by the vacuum-assisted method as in Example 1. The surface appearance properties of the resulting composite are indicated in the following table.

### Example 3 (comparative)

The procedure of example 1 is repeated except that the three-component matrix precursor is replaced by a mixture of 65 parts styrene and 35 parts of a commercial unsaturated polyester resin marketed by COOK COMPOSITES AND POLYMERS. The surface appearance properties of the resulting composite are indicated in the following table.

### Example 4

The matrix precursor of Example 1 was tested for surface profile properties on a gel coated surface to simulate construction of boat assemblies. The fiberglass reinforced panel design was as follows :
4 layers of 2 oz PPG chopped strand mat
1 layer o,5 mm veil Nico Fibers
Gel coated surface on mold

The matrix precursor was used and molded by the vacuum-assisted method described in Example 1. The surface appearance properties of the resulting molded article are indicated in the following table.

### Example 5

The matrix precursor of Example 1 was tested for surface profile properties on a gel coated surface to simulate light weight sections of a boat. The fiberglass reinforced panel design was as follows:
1 layer PPG 1808 combination mat
1 layer 3/8" balsa core material
3 layers 1.5 oz PPG chopped strand mat
1 layer 0.5 veil Nico Fibers
Gel coated surface of mold
The matrix precursor was used and molded by the vacuum-assisted methode described in Example 1. The surface appearance properties of the resulting molded article are indicated in the following table.

**TABLE**

| Example | Long-term waviness | Short-term waviness | Surface rating value |
|---|---|---|---|
| 1 | 2.4 | 0.3 | 9.8 |
| 2 | 17.7 | 22.1 | 5.6 |
| 3 | 62.2 | 51.8 | 1.8 |
| 4 | 6.5 | 16.0 | 7.8 |
| 5 | 0.9 | 1.5 | 10.5 |

## Claims

1. A vacuum-assisted transfer molding process for preparing a molded article comprising a fiber-reinforced thermosetting polyester composite, the composite comprising reinforcing fiber in excess of 30 wt %, based upon the weight of the composite, in a thermoset polyester matrix, wherein the process comprises :
a) coating the surface of a mold with a gel coat ;
b) allowing the gel coat of step (a) to at least partially cure ;
c) applying a skin laminate over the at least partially cured gel coat of step (b) ;
d) applying fiber reinforcement to the skin laminate of step (c) ;
e) closing the mold ; and
f) while the mold is under vacuum, injecting a matrix precursor comprising, in weight percent based upon the weight of the matrix precursor, from about 20 to about 60 % of an unsaturated polyester resin with a molecular weight/double bond factor between about 150 and about 190 ; 30 to about 70 % of a reactive monomer ; 1 to about 25 % of a thermoplastic polymer which is miscible in a blend of the polyester resin and the reactive monomer ; and an initiating amount of a free radical initiator.

2. The process of Claim 1 in which the composite comprises reinforcing fiber in excess of about 50 weight percent.

3. The process of Claims 1 or 2 in which the matrix precursor comprises from about 30 to about 50 weight percent unsaturated polyester resin.

4. The process of Claims 1 to 3 in which the matrix precursor comprises from about 40 to about 60 weight percent reactive monomer.

5. The process of Claims 1 to 4 in which the matrix precursor comprises from about 5 to 20 weight percent thermoplastic polymer.

6. The process of Claims 1 to 5 in which the unsaturated polyester resin has a molecular weight/double bond factor from about 155 to about 170.

7. The process of Claims 1 to 6 in which the number average molecular weight of the unsaturated polyester resin is from about 500 to about 5000.

8. The process of Claims 1 to 7 in which the weight average molecular weight of the thermoplastic polymer is from about 3,000 to about 1,000,000.

9. The process of Claims 1 to 8 in which the thermoplastic polymer is selected from the group consisting of polyvinyl acetate, polyester-based polyurethanes, polycaprolactones, cellulose acetate butyrate, and saturated polyesters.

10. The process of Claims 1 to 9 in which the free radical initiator is an organic peroxide.

11. The process of Claims 1 to 10 in which the matrix precursor comprises from about 0.1 to about 3 weight percent initiator.

12. The process of Claims 1 to 11 in which the skin laminate is between 0,25 to 0,76 mm in thickness.

13. The process of Claims 1 to 12 in which the skin laminate is made up of resins selected from the group consisting of vinyl esters, vinyl ester modified epoxies, and vinyl ester modified unsaturated polyester resins.

14. The process of Claims 1 to 13, in which the matrix precursor is free from any demoulding agent.

15. A molded article made by the process of Claims 1 to 14 comprising :
a. the gel coat,
b. the composite, and
c. the skin laminate between the gel coat and the composite.

16. The molded article of Claim 15 further comprising a core insert.

17. The molded article of Claims 15 or 16 in the shape of a boat hull or deck section.

18. The molded article of Claim 15 or 16 in the shape of a truck body panel.

## Patentansprüche

1. Vakuumunterstütztes Transfer-Molding-Verfahren zur Herstellung eines Formkörpers mit einem faserverstärkten warmhärtenden Polyesterverbundwerkstoff, wobei der Verbundwerkstoff über 30 Gew.-% Verstärkungsfaser, bezogen auf das Gewicht des Verbundwerkstoffs, in einer warmgehärteten Polyestermatrix enthält, bei dem man:
a) die Oberfläche einer Form mit einem Gelcoat versieht;
b) das Gelcoat aus Schritt (a) zumindest teilweise aushärten läßt;
c) über dem zumindest teilweise gehärteten Gelcoat aus Schritt (b) ein Decklaminat aufbringt;
d) auf das Decklaminat aus Schritt (c) Faserverstärkung aufbringt;
e) die Form verschließt und
f) einen Matrixvorläufer, der, bezogen auf das Gewicht des Matrixvorläufers, etwa 20 Gew.-% bis etwa 60 Gew.-% eines ungesättigten Polyesterharzes mit einem Faktor Molekulargewicht/Doppelbindung zwischen etwa 150 und etwa 190; 30 bis etwa 70 Gew.-% eines reaktiven Monomers; 1 bis etwa 25 Gew.-% eines thermoplastischen Polymers, das mit einer Mischung aus dem Polyesterharz und dem reaktiven Monomer mischbar ist; und eine initiierend wirkende Menge eines radikalischen Initiators enthält, einspritzt, während sich die Form unter Vakuum befindet.

2. Verfahren nach Anspruch 1, bei dem der Verbundwerkstoff über etwa 50 Gewichtsprozent Faser enthält.

3. Verfahren nach Anspruch 1 oder 2, bei dem der Matrixvorläufer etwa 30 bis etwa 50 Gewichtsprozent ungesättigtes Polyesterharz enthält.

4. Verfahren nach den Ansprüchen 1 bis 3, bei dem der Matrixvorläufer etwa 40 bis etwa 60 Gewichtsprozent reaktives Monomer enthält.

5. Verfahren nach den Ansprüchen 1 bis 4, bei dem der Matrixvorläufer etwa 5 bis 20 Gewichtsprozent thermoplastisches Polymer enthält.

6. Verfahren nach den Ansprüchen 1 bis 5, bei dem das ungesättigte Polyesterharz einen Faktor Molekulargewicht/Doppelbindung von etwa 155 bis etwa 170 aufweist.

7. Verfahren nach den Ansprüchen 1 bis 6, bei dem das zahlenmittlere Molekulargewicht des ungesättigten Polyesterharzes etwa 500 bis etwa 5000 beträgt.

8. Verfahren nach den Ansprüchen 1 bis 7, bei dem das gewichtsmittlere Molekulargewicht des thermoplastischen Monomers etwa 3000 bis etwa 1.000.000 beträgt.

9. Verfahren nach den Ansprüchen 1 bis 8, bei dem das thermoplastische Monomer aus der Gruppe bestehend aus Polyvinylacetat, Polyester-Polyurethanen, Polycaprolactonen, Celluloseacetatbutyrat und gesättigten Polyestern ausgewählt ist.

10. Verfahren nach den Ansprüchen 1 bis 9, bei dem man als radikalischen Initiator ein organisches Peroxid einsetzt.

11. Verfahren nach den Ansprüchen 1 bis 10, bei dem der Matrixvorläufer etwa 0,1 bis etwa 3 Gewichtsprozent Initiator enthält.

12. Verfahren nach den Ansprüchen 1 bis 11, bei dem das Decklaminat 0,25 bis 0,76 mm dick ist.

13. Verfahren nach den Ansprüchen 1 bis 10, bei dem das Decklaminat aus Harzen aus der Gruppe bestehend aus Vinylestern, vinylestermodifizierten Epoxiden und vinylestermodifizierten ungesättigten Polyesterharzen aufgebaut ist.

14. Verfahren nach den Ansprüchen 1 bis 13, bei dem der Matrixvorläufer kein Entformungsmittel enthält.

15. Nach dem Verfahren gemäß den Ansprüchen 1 bis 14 hergestellter Formkörper, enthaltend:
a. das Gelcoat,
b. den Verbundwerkstoff und
c. das zwischen dem Gelcoat und dem Verbundwerkstoff angeordnete Decklaminat.

16. Formkörper nach Anspruch 15, der außerdem einen Kerneinsatz enthält.

17. Formkörper nach Anspruch 15 oder 16 in Form eines Bootsrumpfs oder einer Decksektion.

18. Formkörper nach Anspruch 15 oder 16 in Form eines Lkw-Karosserieteils.

## Revendications

1. Procédé de moulage par transfert sous vide pour la préparation d'un article moulé comprenant un composite de polyester thermodurcissable renforcé par des fibres, le composite comprenant de la fibre de renforcement à plus de 30% en poids, par rapport au poids du composite, dans une matrice de polyester thermodurcie, où le procédé comprend les étapes consistant à :
a) revêtir la surface du moule d'une couche de gel ;
b) laisser la couche de gel de l'étape (a) durcir au moins partiellement ;
c) appliquer un stratifié à peau sur la couche de gel durcie au moins partiellement de l'étape (b),
d) appliquer un renforcement fibreux au stratifié à peau de l'étape (c)
e) fermer le moule ; et
f) pendant que le moule est sous vide, injecter un précurseur matriciel comprenant, en pour cent en poids par rapport au poids du précurseur matriciel, d'environ 20 à environ 60% d'une résine polyester insaturé ayant un facteur poids moléculaire/double liaison compris entre environ 150 et environ 190 ; de 30 à environ 70% d'un monomère réactif ; de 1 à environ 25% d'un polymère thermoplastique qui est miscible dans un mélange de la résine de polyester et du monomère réactif ; et une quantité d'amorçage d'un amorceur radicalaire.

2. Procédé selon la revendication 1, dans lequel le composite comprend de la fibre de renforcement à plus d'environ 50 pour cent en poids.

3. Procédé selon les revendications 1 ou 2, dans lequel le précurseur matriciel comprend d'environ 30 à environ 50 pour cent en poids de résine de polyester insaturé.

4. Procédé selon les revendications 1 à 3, dans lequel le précurseur matriciel comprend d'environ 40 à environ 60 pour cent en poids de monomère réactif.

5. Procédé selon les revendications 1 à 4, dans lequel le précurseur matriciel comprend d'environ 5 à environ 20 pour cent en poids de polymère thermoplastique.

6. Procédé selon les revendications 1 à 5, dans lequel la résine de polyester insaturé présente un facteur poids moléculaire/double liaison d'environ 155 à environ 170.

7. Procédé selon les revendications 1 à 6, dans lequel le poids moléculaire moyen en nombre de la résine de polyester insaturé est d'environ 500 à environ 5 000.

8. Procédé selon les revendications 1 à 7, dans lequel le poids moléculaire moyen en poids du polymère thermoplastique est d'environ 3 000 à environ 1 000 000.

9. Procédé selon les revendications 1 à 8, dans lequel le polymère thermoplastique est choisi parmi le groupe constitué de l'acétate de polyvinyle, de polyuréthannes à base de polyester, de polycaprolactones, de l'acétate-butyrate de cellulose et de polyesters saturés.

10. Procédé selon les revendications 1 à 9, dans lequel l'amorceur radicalaire est un peroxyde organique.

11. Procédé selon les revendications 1 à 10, dans lequel le précurseur matriciel comprend d'environ 0,1 à environ 3 pour cent en poids d'amorceur.

12. Procédé selon les revendications 1 à 11, dans lequel le stratifié à peau est de 0,25 à 0,76 mm d'épaisseur.

13. Procédé selon les revendications 1 à 12, dans lequel le stratifié à peau est composé de résines choisies parmi le groupe constitué d'esters vinyliques, d'époxy modifiés par des esters vinyliques, et de résines de polyesters insaturés modifiés par des esters vinyliques.

14. Procédé selon les revendications 1 à 13, dans lequel le précurseur matriciel est exempt de tout agent de démoulage.

15. Article moulé fabriqué par le procédé selon les revendications 1 à 14, comprenant :
a. la couche de gel,
b. le composite, et
c. le stratifié à peau entre la couche de gel et le composite.

16. Article moulé selon la revendication 15, comprenant en outre une pièce d'insertion de noyau.

17. Article moulé selon les revendications 15 ou 16, sous la forme d'une coque de bateau ou d'une partie de pont.

18. Article moulé selon la revendication 15 ou 16, sous la forme d'un panneau de carrosserie de poids lourd.
